# EUROPEAN PATENT SPECIFICATION

(11) **EP 1 827 912 B1**
(45) Date of publication and mention of the grant of the patent: **10.03.2010**
(21) Application number: 04809102.9
(22) Date of filing: 16.12.2004
(51) Int. Cl.: B60R 19/56

(54) **ARRANGEMENT FOR UNDERRUN PROTECTION IN VEHICLES**
ANORDNUNG FÜR UNTERFAHRSCHUTZ IN FAHRZEUGEN
DISPOSITIF D'ANTI-ENCASTREMENT DE VEHICULES

(43) Date of publication of application: 05.09.2007
(73) Proprietor: VOLVO LASTVAGNAR AB, 405 08 Göteborg (SE)
(72) Inventor: ANDERSSON, Jörgen, S-417 46 Göteborg (SE); ANDERSSON, Ulf, S-421 41 Västra Frölunda (SE); AHLIN, Peter, S-554 50 Jönköping (SE); PALM, Mikael, S-414 78 Göteborg (SE)
(74) Representative: Fröhling, Werner Otto
(86) International application number: PCT/SE2004/001929
(87) International publication number: WO 2006/065187

(56) References cited:
- EP-A1- 0 557 733
- WO-A1-98/41423
- WO-A1-02/081264
- DE-A1- 10 130 637
- US-A- 6 116 667
- US-B1- 6 244 637

## Description

### Field of the invention

The invention relates to an arrangement for underrun protections in vehicles.

### Background of the invention

Larger motor vehicles, such as commercial vehicles, are designed with a relatively high ground clearance. In a collision between such a commercial vehicle and a passenger car there is a risk that the passenger car runs beneath the larger motor vehicle, which may result in serious damage to the car compartment. This is commonly referred to as an underrun accident.

To prevent a colliding passenger car from running beneath the larger vehicle, larger motor vehicles generally have a bumper or protective guard, in particular at the front and/or rear ends of the larger vehicle. Some known protective guard arrangements are also arranged to be energy-absorbing, that is to absorb energy in the event of a collision. This reduces the amount of energy from the collision that is transferred to the colliding passenger car.

WO 02/081264 (Volvo Lastvagnar AB) describes an underrun protection arrangement for a vehicle comprising a frame, an impact element, and an energy absorbing element, which connects the impact element to the frame and which is designed to be compressed in the event of a pivoting movement on the part of the impact element. The arrangement further comprise a locking element, which is designed to permit the pivoting movement only in the event of a stress acting on the impact element with a force that exceeds a predetermined limit.

EP 0 894 678 (Hope Technical Sales and Service Ltd) describes an underrun guard for a road transport vehicle comprising a beam intended to be supported across the rear of the vehicle by a support means which yield under a force which would otherwise be likely to cause damage to the vehicle. The support means comprises at least one first plate for attachment to the vehicle, and clamping means for clamping the plates together while permitting relative pivoting movement between said first and second plates when a substantial force is applied to the beam.

WO 98/41423 (Volvo Lastvagnar AB) describes a device for underrun protection of vehicles, comprising a frame, an impact element, and an energy absorbing element that connects the frame to the impact element. The energy absorbing element is shaped with a weakened portion which essentially constitutes a pivoting joint for deforming bending of the element during said impact. Further, there is provided a counteracting element, which said energy-absorbing element comes into contact with after a predetermined deformation.

DE 10130637 describes an underrun protection for a vehicle according to the preamble of claim 1, comprising first and second energy absorbing structures between the frame and the impact element. The second energy absorbing structure is deformed by bending while absorbing energy.

EP-A1-0557733 describes an underrun protection for a vehicle, comprising first and second energy absorbing structures between the frame and the impact element. The second energy absorbing structure comprises a piston/cylinder which is compressed while absorbing energy.

In a continual effort to enhance the safety in case of collisions between passenger cars and larger vehicles, it is desired to further enhance also the underrun protection devices of larger vehicles. Preferably, the underrun protection should be enhanced in a manner which does not result in an additional overall length of the vehicle.

### Summary of the invention

Thus, an object of the invention is to provide an enhanced underrun protection for larger vehicles such as commercial vehicles.

This object is achieved by an underrun protection arrangement for a vehicle, comprising a frame, the special features of which are set out in claim 1 below.

The arrangement of a first and a second energy absorbing element renders it possible to absorb larger energies than with many previous arrangements, and consequently, to reduce the energy of the impact being transferred to the colliding vehicle, such as a passenger car. Further, the provision of a second energy absorbing element provides additional possibilities of adapting the energy absorption behaviour of the arrangement. Thus, the manner in which the impact energy is absorbed may be controlled so as to minimise damages on other parts of the vehicle.

Preferably, the first energy absorbing element is arranged to allow said first displacement when the force transmitted from the impact element exceeds a first threshold limit, and the second energy absorbing element is arranged to allow said second displacement when the force transmitted from the impact element exceeds a second threshold limit, the second threshold limit being greater than the first threshold limit. In this configuration, two separate energy absorption steps are provided. Thus, the energy absorbing elements may be adapted so that less severe collisions, involving lesser impact energy, will trigger the first energy absorbing element only, leaving the second energy absorbing element intact. A larger collision, involving greater impact energy, would trigger the first energy absorbing element first, and, thereafter, the second energy absorbing element. Accordingly, the behaviour of the arrangement at a larger impact may be controlled by the first and the second energy absorbing elements.

The second energy absorbing element may advantageously be provided with a direction means for controlling the second displacement during absorption of energy of the second energy absorbing element. Thus, the second displacement may be controlled to be as advantageous as possible. Accordingly, a colliding vehicle may be guided at least to some extent so as to reduce the risk of injuries and to reduce the damage caused on the vehicle carrying the underrun protection arrangement.

Advantageously, said second displacement is in a direction other than the direction of the first displacement. This arrangement is particularly suitable for making use of available space in the front/end region of a vehicle for energy absorption. Thus, the underrun protection arrangement may be kept relatively compact and preferably does not necessitate addition to the full length of the vehicle.

The first displacement may advantageously comprise pivoting of the impact element in relation to the frame.

Preferably, the second displacement may comprise pivoting of the impact element in relation to the frame and/or translation of the impact element in relation to the frame.

For additional energy absorption, the slot may be narrowing in the direction in which the expansion device will travel in the slot.

Advantageously, said second energy absorbing element may have an impact portion against which the impact element abuts after the first displacement. Thus, the second energy absorber may be triggered by impact energy being transferred to the impact portion.

In a useful embodiment, the first energy absorbing element may be arranged between the impact element and the second energy absorbing element, and the impact element being pivotal in relation to the second energy absorbing element, such that the first energy absorbing element may absorb energy during pivotal displacement of the impact element in relation to the second energy absorbing element.

The invention also relates to a vehicle comprising an underrun protection arrangement as described above.

### Brief description of the accompanying drawings

Other features and advantages of the present invention will appear more clearly from the following description of exemplary embodiments, wherein
Fig. 1a is an illustration of an underrun protection arrangement for a vehicle;
Fig. 1b is an illustration of a variant of an underrun protection arrangement for a vehicle of Fig. 1a;
Fig. 2 is an illustration of an embodiment of an underrun protection arrangement for a vehicle according to the invention;
Fig. 3 is an illustration of another underrun protection arrangement for a vehicle.

### Detailed description of preferred embodiments of the invention

Features and advantages of the invention will now be described with reference to exemplary embodiments.

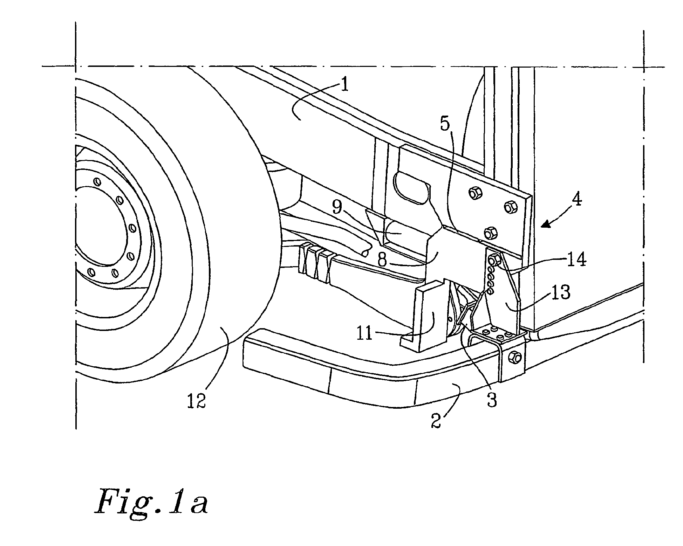

Figs 1a to 3 illustrate different underrun protection arrangements for a vehicle, comprising a frame 1 and an impact element 2 for taking up impact in case of a collision.

The frame 1 as referred to herein is a part of the vehicle to which the underrun protection arrangement is attached. In this case, the underun protection arrangement is directly attached to the frame 1, but one could also envisage embodiments in which one or more intermediate parts are arranged in between the underrun protection arrangement and the actual vehicle frame.

The underrun protection device may suitably be arranged at the front end and/or the rear end of the vehicle. Vehicles generally benefiting from underrun protection arrangements are larger vehicles, such as e.g. trucks and buses.

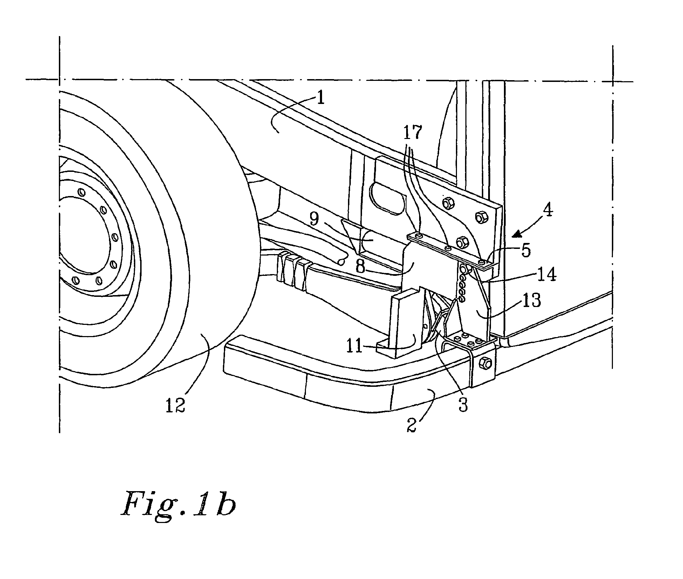

The impact element 2 is suitably a bumper or other device intended to take up impact in case of a collision, and to hinder colliding vehicles from ending up underneath the vehicle carrying the underrun protection. In Figs 1a to 3 it is seen how the impact element 2 extends along the end of the vehicle and forms a bend towards its wheel 12. The impact element 2 need not necessarily have this particular shape, but could e.g. be formed as a straight bar extending along the end of the vehicle. In Figs 1 to 3 only one of the lateral sides of the underrun protection arrangement is illustrated, though it is readily understood that the other side of the arrangement will have a similar construction.

Figs. 1a and 1b illustrate two variants of an underrun protection arrangement not according to the invention. A first energy absorbing element 3 is arranged between the frame 1 and the impact element 2 for absorbing energy in case of a crash while allowing a first displacement of the impact element 2 in relation to the frame 1. Further, a second energy absorbing element 4 is arranged between the first energy absorbing element 3 and the frame 1 for absorbing energy while allowing a second displacement of the impact element in relation to the frame 1.

In Figs 1a and 1b, the impact element 2 is pivotally arranged in relation to the second energy absorbing element 4 via a connector element 13, so as to, in case of an impact, pivot about an axis 14 where the connector element 13 is connected to the second energy absorbing element 4. The first energy absorbing element 3 is arranged between the impact element 2 and the second energy absorbing element 4, and is, in this case, a compressible element for absorbing energy during compression.

The second energy absorbing element 4 comprises in the embodiment of Figs 1a and 1b a console 8 and a compressible element 9.

The console 8 is provided with a direction means 5 for controlling a first part of the second displacement during absorption of energy of the second energy absorbing element 4.

In the variant illustrated in Fig. 1a, the direction means 5 comprises a weakening line, along which the second energy absorber is adapted to shear off to allow the second displacement while absorbing energy. The weakening line may be a portion of the second energy absorber 4 having a lesser thickness than the surrounding parts of the console, or having perforations, indentations or other structures making the line susceptible for breaking when the second energy absorber 4 is subject to shear forces.

Alternatively, and as illustrated in Fig. 1b, the weakening line 5 may be an assembly line between two separate pieces, together forming the console 8. The two separate pieces may be assembled by means of fastening devices 17, such as bolts, along the weakening line 5. The strength of the weakening line may be controlled by the amount and type of fastening devices 17 selected. This alternative embodiment has the advantage that, when subject to shear forces, the fastening devices will shear off, leaving the two console pieces intact. Accordingly, the console 8 may be easily be repaired after an impact by reassembling the two console pieces, using new fastening devices 17.

Regardless of the construction of the weakening line 5, it may, as in this embodiment, divide the console 8 in two parts, the upper part being fixedly attached to the frame 4. The impact element 2 may be attached to the lower part of the console 8 via the connector means 13.

Further, the second energy absorbing element 4 may have an impact portion 11 against which the impact element 2 abuts after the first displacement. In Fig.1, the impact portion 11 forms an impact surface transverse to the weakening line, and facing the impact element 2. Thus, a force transmitted to the impact element facing surface of the impact portion 11 of the second energy absorber 4 will act to shear off the lower portion of the console 8.

In Figs 1a and 1b, the second energy absorbing element 4 further comprises a compressible element 9 being arranged in relation to the console 8 so as to be compressed while absorbing energy and allowing said second displacement. The compressible element 9 is in this case a compressible tube shaped element, which is arranged to abut the lower portion of the console 8. Thus, once the lower portion of the console 8 is sheared off, compression of the element 9 may take place, whereby the displacement of the impact member 2 may continue during additional energy absorption. The tube 9 is in this case arranged parallel to the weakening line 5. Accordingly, the energy absorption accomplished by the shearing-off at the weakening line and accomplished by compression of the tube will take place during displacement of the impact member 2 along a line in parallel to the weakening line 5 and the tube 9.

In case of a crash, the impact on the impact member 2 would in Figs 1a and 1b initially cause a first displacement of the impact member 2 in relation to the frame 1 and to the second energy absorbing element 4. During said first displacement of the impact member 2, the energy absorbing element 3 will compress and thereby absorb energy. The first displacement will be a pivotal displacement, where the impact member 2 will pivot in relation to the frame 1 and to the second energy absorbing element 4.

If the energy from the impact is relatively moderate, the first energy absorbing element 3 may absorb all of its energy, resulting in the impact member 2 reaching a final position before the second energy absorbing element 4 is activated. In case of a larger impact, the first energy absorbing element 3 might not absorb all of the energy, and the impact member 2 will pivot until it abuts the impact portion 11 of the second energy absorbing element 4. Now, impact energy will be transmitted from the impact member 2 to the second energy absorbing element 4, in this case to the lower portion of the console 8. The force transmitted to the second energy absorbing element 4 will act so as to shear off the lower portion of the console 8 during absorption of additional energy. Further energy will be absorbed by the compressible tube 9 being arranged in relation to the lower part of the console. Thus, the second energy absorbing element 4 will absorb energy when the weakening line 5 is sheared off, and when the tube 9 is compressed. During said absorption, the impact element 2 will follow a second displacement. In this case, the second displacement is a translation of the impact element 2 in relation to the frame 1.

The first energy absorbing element 3 should be selected to be weaker than the second energy absorbing element 4, meaning that the threshold force for allowing the first displacement should be less than the threshold force for allowing the second displacement. The purpose of this is to ensure that the first energy absorbing element 3 will be activated before the second energy absorbing element 4 in case of a crash. In the embodiment of Figs 1a and 1b, this may be accomplished e.g. by comparing the compressibility of the first energy absorbing element 3 with the force needed to shear off the second energy absorbing element along the weakening line/assembly line.

The second displacement may advantageously be in a direction other than the direction of the first displacement. This is to enable the constructions to take as little space as possible, while still being able to minimise damage to the vehicle itself such as its frame 1 or wheels 12. As explained above, in the embodiment of Fig. 1a, the first displacement is in a pivotal direction, whereas the second displacement is a translational displacement of the impact element 2 in relation to the frame 1.

Materials suitable for the console of the embodiment of Fig. 1a include material suitable for shearing-off, such as castings or steel. Materials suitable for the tube 9 are materials being weaker than the material of the console, such as aluminium, composite materials, or steel.

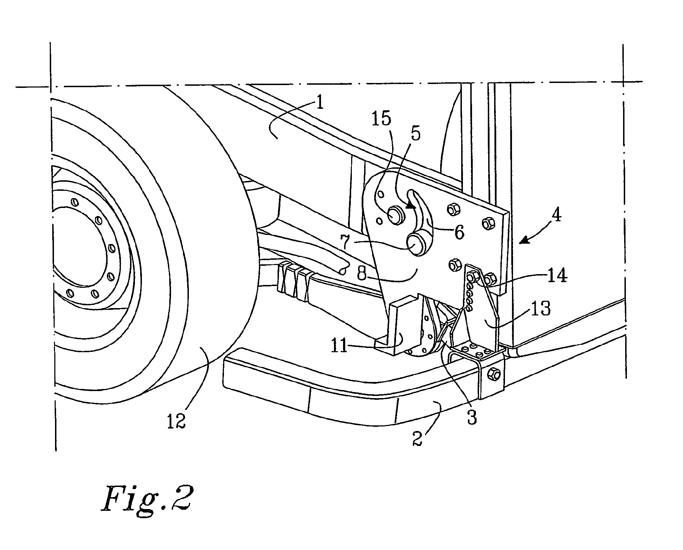

Fig. 2 illustrates an embodiment of an underrun protection arrangement according to the invention. Similar to the arrangement described in relation to Fig. 1, a first energy absorbing element 3 is arranged between the frame 1 and the impact element 2 for absorbing energy in case of a crash while allowing a first displacement of the impact element 2 in relation to the frame 1. Further, a second energy absorbing element 4 is arranged between the first energy absorbing element 3 and the frame 1 for absorbing energy while allowing a second displacement of the impact element in relation to the frame 1.

In this embodiment, the impact element 2 is pivotally arranged in relation to the second energy absorbing element 4 via a connector element 13, so as to, in case of an impact, pivot about an axis 14 where the connector element 13 is connected to the second energy absorbing element 4. The first energy absorbing element 3 is arranged between the impact element 2 and the second energy absorbing element 4, and is, in this case, a compressible element for absorbing energy during compression.

In the embodiment of Fig. 2, the second energy absorbing element 4 comprises a console 8 which is pivotably arranged in relation to the frame 1. Here, the energy absorbing element 4 is connected to the frame 1 so as to be pivotable about an axis 15. The second energy absorbing element 4 further comprises a console which is provided with a direction means 5 for controlling the second displacement during absorption of energy of the second energy absorbing element 4. The direction means comprises in this case a plastically deformable portion 5 where the second energy absorber is arranged to plastically deform to allow the second displacement while absorbing energy. Here, the plastically deformable portion 5 forming the direction means comprises a slot 6 in which an expansion device 7 being wider than said slot 6 is arranged. As may be seen in Fig. 2, the slot is narrowing so that, when the console 8 is pivoted about the axis 15, the expansion device 7 must widen the slot to a greater degree as the pivoting movement progresses. Accordingly, the plastic deformation and the absorption of energy increase.

Further, the second energy absorbing element 4 has in this embodiment an impact portion 11 against which the impact element 2 abuts after the first displacement. In Fig. 2, the impact portion 11 forms an impact surface transverse to the slot 5, and facing the impact element 2. Thus, a force transmitted to the impact element facing surface of the impact portion 11 of the second energy absorber 4 will act so as to pivot the console 8 forcing the expansion device 7 to plastically deform the area around the slot 6.

In case of a crash, the impact on the impact member 2 would in the embodiment of Fig. 2 initially cause a first displacement of the impact member 2 in relation to the frame 1 and to the second energy absorbing element 4. During said first displacement of the impact member 2, the energy absorbing element 3 will compress and thereby absorb energy. The first displacement will be a pivotal displacement, where the impact member 2 will pivot in relation to the frame 1 and to the second energy absorbing element 4.

If the energy from the impact is relatively moderate, the first energy absorbing element 3 may absorb the all of its energy, resulting in the impact member 2 reaching a final position before the second energy absorbing element 4 is activated. In case of a larger impact, the first energy absorbing element 3 might not absorb all of the energy, and the impact member 2 will pivot until it abuts the impact portion 11 of the second energy absorbing element 4. Now, impact will be transmitted from the impact member 2 to the second energy absorbing element 4, in this case to the lower portion of the console 8. The force transmitted to the second energy absorbing element 4 will act so as to pivot the console 8 about the axis 15 during absorption of energy via the plastic deformation of material surrounding the slot 6 in which the expansion device 7 must travel. During said absorption, the impact element 2 will follow a second displacement, in this case being a second pivotal displacement where the impact element 2 pivots in relation to the frame 1. However, the second pivotal displacement is different from the first pivotal displacement in that the pivot axis is not identical.

As in the previously described example, the first energy absorbing element 3 should be selected so as to be activated before the second energy absorbing element 4. In the embodiment of Fig. 2, this may be accomplished by e.g. comparing the force needed for compressing the first energy absorbing element with the force required to plastically deform the material around the slot 6.

Materials suitable for the console of the embodiment of Fig. 2 include materials suitable for controlled plastic deformation, such as steel.

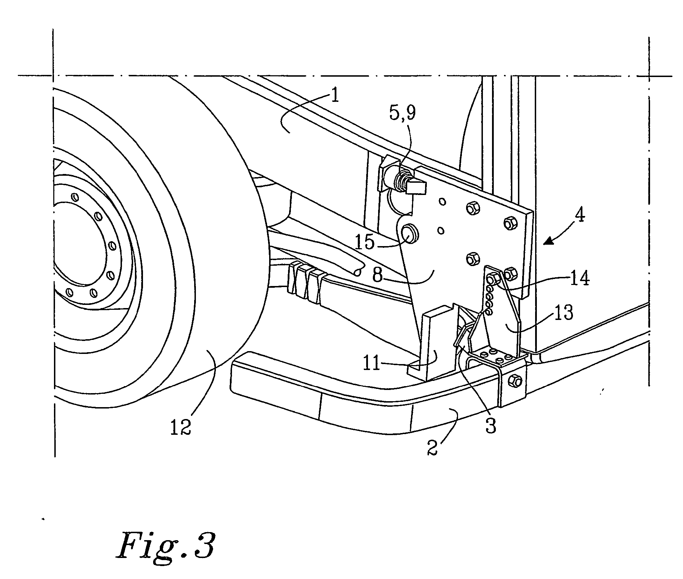

Fig. 3 illustrates another underrun protection arrangement. Similar to the arrangements described in relation to Figs 1 and 2, a first energy absorbing element 3 is arranged between the frame 1 and the impact element 2 for absorbing energy in case of a crash while allowing a first displacement of the impact element 2 in relation to the frame 1. Further, a second energy absorbing element 4 is arranged between the first energy absorbing element 3 and the frame 1 for absorbing energy while allowing a second displacement of the impact element in relation to the frame 1. The impact element 2 is pivotally arranged in relation to the second energy absorbing element 4 via a connector element 13, so as to, in case of an impact, pivot about an axis 14 where the connector element 13 is connected to the second energy absorbing element 4. The first energy absorbing element 3 is arranged between the impact element 2 and the second energy absorbing element 4, and is, in this case, a compressible element for absorbing energy during compression.

In this arrangement, the second energy absorbing element 4 comprises a console 8 which is pivotably arranged in relation to the frame 1 and an extendible element 9.

Here, the energy absorbing element 4 is connected to the frame 1 so as to be pivotable about an axis 15. The energy absorbing element comprises a console 8, which is arranged so as to be influenced by a direction means 5 for controlling the second displacement during absorption of energy. The direction means 5 is in this case an extendible element 9 being arranged in relation to the console so as to extend during pivoting of the console 8 about the axis 15, while absorbing energy and allowing said second displacement. Here, the extendible device 9 is a telescopic device, of the type striving to remain in its compressed state.

Further, the second energy absorbing element 4 has in this embodiment an impact portion 11 against which the impact element 2 abuts after the first displacement. The impact portion 11 forms an impact surface transverse to the slot 5, and facing the impact element 2. Thus, a force transmitted to the impact element facing surface of the impact portion 11 of the second energy absorber 4 will act so as to pivot the console 8 forcing the extendible member 9 to extend, thereby absorbing energy.

In case of a crash, the impact on the impact member 2 would in Fig. 3 initially cause a first displacement of the impact member 2 in relation to the frame 1 and to the second energy absorbing element 4. During said first displacement of the impact member 2, the energy absorbing element 3 will compress and thereby absorb energy. The first displacement will be a pivotal displacement, where the impact member 2 will pivot in relation to the frame 1 and to the second energy absorbing element 4.

If the energy from the impact is relatively moderate, the first energy absorbing element 3 may absorb the all of its energy, resulting in the impact member 2 reaching a final position before the second energy absorbing element 4 is activated. In case of a larger impact, the first energy absorbing element 3 might not absorb all of the energy, and the impact member 2 will pivot until it abuts the impact portion 11 of the second energy absorbing element 4. Now, impact will be transmitted from the impact member 2 to the second energy absorbing element 4, in this case to the lower portion of the console 8. The force transmitted to the second energy absorbing element 4 will act so as to pivot the console 8 about the axis 15 during absorption of energy via the extension of the extendible member 9. During said absorption, the impact element 2 will follow a second displacement, in this case being a second pivotal displacement where the impact element 2 pivots in relation to the frame 1. However, the second pivotal displacement is different from the first pivotal displacement in that the pivot axis is not identical.

As in the previously described, the first energy absorbing element 3 should be selected so as to be activated before the second energy absorbing element 4. In the embodiment of Fig. 2, this may be accomplished by e.g. comparing the force needed for compressing the first energy absorbing element with the force required to extend the extendible device 9.

Although the embodiment described in relation to the drawings is believed to be the most advantageous at present, there are numerous alternative embodiments that may be envisaged. The embodiment described above is used in connection with a compressible type of first energy absorber. However, also other types of first energy absorbers may be used, as long as it is ensured that they are trigged before the second energy absorber. The different methods of energy absorption described in the arrangements above may be replaced or combined. For example, a second energy absorber using plastic deformation as described in relation to Fig. 2 may be provided with an additional extendible device type energy absorber as used in the embodiment of Fig. 3. Also, the energy absorption method using a slot around which material is plastically deformed is naturally not restricted to embodiments where the second energy absorber is made to pivot, but could also be used with a translation movement, if using e.g. a straight slot.

## Claims

1. An underrun protection arrangement for a vehicle, comprising a frame (1), an impact element (2) for receiving impact in case of a collision, and a first energy absorbing element (3) being arranged between the frame (1) and the impact element (2) for absorbing energy in case of a crash while allowing a first displacement of the impact element (2) in relation to the frame (1), a second energy absorbing element (4) being arranged between the first energy absorbing element (3) and the frame (1) for absorbing energy while allowing a second displacement of the impact element in relation to the frame (1), wherein said second energy absorbing element (4) is provided with a direction means (5) for controlling the second displacement during absorption of energy of the second energy absorbing element (4) and comprises a plastically deformable portion (5) in which the second energy absorber (4) is adapted to plastically deform to allow the second displacement while absorbing energy, and **characterised in that** the plastically deformable portion (5) forming the direction means comprises a slot (6) in which an expansion device (7) being wider than said slot (6) is arranged, such that the portion (5) of the energy absorber adjacent to the slot (6) is widened by the expansion device (7) as the second displacement occurs, during plastic deformation and absorption of energy.

2. An underrun protection arrangement according to claim 1, wherein the first energy absorbing element (3) is arranged to allow said first displacement when the force transmitted from the impact element (2) exceeds a first threshold limit, and the second energy absorbing element (4) is arranged to allow said second displacement when the force transmitted from the impact element (2) exceeds a second threshold limit, the second threshold limit being greater than the first threshold limit.

3. An underrun protection arrangement according to any one of the claims 1 or 2, wherein said second displacement is in a direction other than the direction of the first displacement.

4. An underrun protection arrangement according to any one of the claims 1 to 3, wherein the first displacement comprises pivoting of the impact element (2) in relation to the frame (1).

5. An underrun protection arrangement according to any one of the claims 1 to 4, wherein the second displacement comprises pivoting of the impact element (2) in relation to the frame (1).

6. An underrun protection arrangement according to any one of the claims 1 to 5, wherein the second displacement comprises translation of the impact element (2) in relation to the frame (1).

7. An underrun protection arrangement according to any one of claims 1-6, wherein the second energy absorber is movable in relation to the expansion device (7) for achieving the second displacement, and the slot (6) is narrowing in the direction in which the expansion device (7) will travel in the slot (6) during said second displacement.

8. An underrun protection arrangement according to any one of the claims 1 to 7, wherein the second energy absorbing element (4) comprises a console (8).

9. An underrun protection arrangement according to claim 8, wherein the impact element (2) is pivotable in relation to said console (8).

10. An underrun protection arrangement according to claim 8 or 9, wherein said console (8) is pivotably arranged in relation to the frame (1).

11. An underrun protection arrangement according to any one of the previous claims, wherein said second energy absorbing element (4) has an impact portion (11) against which the impact element (2) abuts after the first displacement.

12. An underrun protection arrangement according to any one of the previous claims, wherein said first energy absorbing element (3) is arranged between the impact element (2) and the second energy absorbing element (4), and the impact element (2) is pivotal in relation to the second energy absorbing element (4), such that the first energy absorbing element (3) may absorb energy during pivotal displacement of the impact element (2) in relation to the second energy absorbing element (4).

13. An underrun protection arrangement according to any one of the previous claims, wherein said first energy absorbing element (3) is compressible for absorbing said energy.

14. A vehicle comprising an underrun protection arrangement according to any one of the preceding claims.

## Patentansprüche

1. Unterlaufschutzeinrichtung für ein Fahrzeug mit einem Rahmen (1), einem Aufprallelement (2) zur Aufnahme eines Aufpralls im Falle einer Kollision, und einem ersten Energieabsorptionselement (3), das zwischen dem Rahmen (1) und dem Aufprallelement (2) angeordnet ist, um Energie im Falle eines Aufschlages zu absorbieren, während eine erste Verschiebung des Aufprallelements (2) bezüglich des Rahmens (1) ermöglicht wird, wobei ein zweites Energieabsorptiönselement (4) zwischen dem ersten Energieabsorptionselement (3) und dem Rahmen (1) zur Absorbierung von Energie angeordnet ist, während eine zweite Verschiebung des Aufprallelements bezüglich des Rahmens (1) ermöglicht wird, wobei das zweite Energieabsorptionselement (4) mit einer Richtungseinrichtung (5) zur Steuerung der zweiten Verschiebung während der Absorption von Energie des zweiten Energieabsorptionselements (4) versehen ist und einen plastisch verformbaren Abschnitt (5) umfasst, in dem das zweite Energieabsorptionselement sich plastisch verformen kann, um die zweite Verschiebung während der Absorption von Energie zu ermöglichen, **dadurch gekennzeichnet, dass** der die Richtungseinrichtung bildende plastisch verformbare Abschnitt (5) einen Schlitz (6) umfasst, in dem eine Spreizvorrichtung (7) angeordnet ist, die breiter ist als der Schlitz (6), so dass der Abschnitt (5) des Energieabsorptionselements angrenzend an den Schlitz (6) durch die Spreizvorrichtung (7) erweitert wird, wenn die zweite Verschiebung während der plastischen Verformung und der Absorption von Energie auftritt.

2. Unterlaufschutzeinrichtung nach Anspruch 1, bei der das erste Energieabsorptionselement (3) so angeordnet ist, dass es eine erste Verschiebung ermöglicht, wenn die von dem Aufprallelement (2) übertragene Kraft eine erste Schwellgrenze überschreitet, und das zweite Energieabsorptionselement (4) so angeordnet ist, dass es die zweite Verschiebung ermöglicht, wenn die von dem Aufprallelement (2) übertragene Kraft eine zweite Schwellgrenze überschreitet, wobei die zweite Schwellgrenze größer ist als die erste Schwellgrenze.

3. Unterlaufschutzeinrichtung nach einem der Ansprüche 1 oder 2, bei der die zweite Verschiebung in einer anderen Richtung stattfindet als die Richtung der ersten Verschiebung.

4. Unterlaufschutzeinrichtung nach einem der Ansprüche 1 bis 3, bei der die erste Verschiebung eine Verschwenkung des Aufprallelements (2) bezüglich des Rahmens (1) umfasst.

5. Unterlaufschutzeinrichtung nach einem der Ansprüche 1 bis 4, bei der die zweite Verschiebung eine Verschwenkung des Aufprallelements (2) bezüglich des Rahmens (1) umfasst.

6. Unterlaufschutzeinrichtung nach einem der Ansprüche 1 bis 5, bei der die zweite Verschiebung eine Translation des Aufprallelements (2) bezüglich des Rahmens (1) umfasst.

7. Unterlaufschutzeinrichtung nach einem der Ansprüche 1 bis 6, bei der das zweite Energieabsorptionselement bezüglich der Spreizvorrichtung (7) bewegbar ist, um die zweite Verschiebung zu erreichen, und sich der Schlitz (6) in der Richtung verengt, in der die Spreizvorrichtung (7) sich in dem Schlitz (6) während der zweiten Verschiebung bewegt.

8. Unterlaufschutzeinrichtung nach einem der Ansprüche 1 bis 7, bei der das zweite Energieabsorptionselement (4) eine Konsole (8) umfasst.

9. Unterlaufschutzeinrichtung nach Anspruch 8, bei der das Aufprallelement (2) bezüglich der Konsole (8) schwenkbar ist.

10. Unterlaufschutzeinrichtung nach Anspruch 8 oder 9, bei der die Konsole (8) bezüglich des Rahmens (1) schwenkbar angeordnet ist.

11. Unterlaufschutzeinrichtung nach einem der vorhergehenden Ansprüche, bei der das zweite Energieabsorptionselement (4) einen Aufprallabschnitt (11) aufweist, gegen den das Aufprallelement (2) nach der ersten Verschiebung anliegt.

12. Unterlaufschutzeinrichtung nach einem der vorhergehenden Ansprüche, bei der das erste Energieabsorptionselement (3) zwischen dem Aufprallelement (2) und dem zweiten Energieabsorptionselement (4) angeordnet ist, und das Aufprallelement (2) bezüglich des zweiten Energieabsorptionselements (4) schwenkbar ist, so dass das erste Energieabsorptionselement (3) Energie während einer Schwenkverschiebung des Aufprallelements (2) bezüglich des zweiten Energieabsorptionselements absorbieren kann.

13. Unterlaufschutzeinrichtung nach einem der vorhergehenden Ansprüche, bei der das erste Energieabsorptionselement (3) zur Absorption der Energie kompressibel ist.

14. Fahrzeug mit einer Unterlaufschutzeinrichtung nach einem der vorhergehenden Ansprüche.

## Revendications

1. Dispositif de protection anti-encastrement pour un véhicule, comprenant un cadre (1), un élément d'impact (2) pour recevoir un impact dans le cas d'une collision, et un premier élément d'absorption d'énergie (3) étant agencé entre le cadre (1) et l'élément d'impact (2) pour absorber l'énergie dans le cas d'un accident tout en permettant un premier déplacement de l'élément d'impact (2) par rapport au cadre (1), un second élément d'absorption d'énergie (4) étant agencé entre le premier élément d'absorption d'énergie (3) et le cadre (1) pour absorber l'énergie tout en permettant un second déplacement de l'élément d'impact par rapport au cadre (1), dans lequel ledit second élément d'absorption d'énergie (4) est fourni avec des moyens de direction (5) pour contrôler le second déplacement pendant l'absorption d'énergie du second élément d'absorption d'énergie (4) et comprend une partie plastiquement déformable (5) dans laquelle le second absorbeur d'énergie (4) est adapté pour se déformer plastiquement afin d'autoriser le second déplacement tout en absorbant de l'énergie, et **caractérisé en ce que** la partie plastiquement déformable (5) formant les moyens de direction comprend une fente (6) dans laquelle un dispositif de dilatation (7) plus large que ladite fente (6) est agencé, de sorte que la partie (5) de l'absorbeur d'énergie adjacent à la fente (6) est élargie par le dispositif de dilatation (7) lorsque le second déplacement a lieu, pendant la déformation plastique et l'absorption d'énergie.

2. Dispositif de protection anti-encastrement selon la revendication 1, dans lequel le premier élément d'absorption d'énergie (3) est agencé pour autoriser ledit premier déplacement lorsque la force transmise à partir de l'élément d'impact (2) dépasse une première limite de seuil, et le second élément d'absorption d'énergie (4) est agencé pour autoriser ledit second déplacement lorsque la force transmise à partir de l'élément d'impact (2) dépasse une seconde limite de seuil, la seconde limite de seuil étant supérieure à la première limite seuil.

3. Dispositif de protection anti-encastrement selon l'une quelconque des revendications 1 ou 2, dans lequel ledit second déplacement est dans une direction autre que la direction du premier déplacement.

4. Dispositif de protection anti-encastrement selon l'une quelconque des revendications 1 à 3, dans lequel le premier déplacement comprend le pivotement de l'élément d'impact (2) par rapport au cadre (1).

5. Dispositif de protection anti-encastrement selon l'une quelconque des revendications 1 à 4, dans lequel le second déplacement comprend le pivotement de l'élément d'impact (2) par rapport au cadre (1).

6. Dispositif de protection anti-encastrement selon l'une quelconque des revendications 1 à 5, dans lequel le second déplacement comprend la translation de l'élément d'impact (2) par rapport au cadre (1).

7. Dispositif de protection anti-encastrement selon l'une quelconque des revendications 1 à 6, dans lequel le second absorbeur d'énergie est mobile par rapport au dispositif de dilatation (7) pour obtenir le second déplacement, et la fente (6) va en se rétrécissant dans la direction dans laquelle le dispositif de dilatation (7) circulera dans la fente (6) pendant ledit second déplacement.

8. Dispositif de protection anti-encastrement selon l'une quelconque des revendications 1 à 7, dans lequel le second élément d'absorption d'énergie (4) comprend une console (8).

9. Dispositif de protection anti-encastrement selon la revendication 8, dans lequel l'élément d'impact (2) peut pivoter par rapport à ladite console (8).

10. Dispositif de protection anti-encastrement selon la revendication 8 ou 9, dans lequel ladite console (8) est agencée de manière pivotante par rapport au cadre (1).

11. Dispositif de protection anti-encastrement selon l'une quelconque des revendications précédentes, dans lequel ledit second élément d'absorption d'énergie (4) a une partie d'impact (11) contre laquelle l'élément d'impact (2) se juxtapose après le premier déplacement.

12. Dispositif de protection anti-encastrement selon l'une quelconque des revendications précédentes, dans lequel ledit premier élément d'absorption d'énergie (3) est agencé entre l'élément d'impact (2) et le second élément d'absorption d'énergie (4), et l'élément d'impact (2) est central par rapport au second élément d'absorption d'énergie (4), de sorte que le premier élément d'absorption d'énergie (3) peut absorber de l'énergie pendant le déplacement par pivotement de l'élément d'impact (2) par rapport au second élément d'absorption d'énergie (4).

13. Dispositif de protection anti-encastrement selon l'une quelconque des revendications précédentes, dans lequel ledit premier élément d'absorption d'énergie (3) est compressible pour absorber ladite énergie.

14. Véhicule comprenant un dispositif de protection anti-encastrement selon l'une quelconque des revendications précédentes.
